# EUROPEAN PATENT APPLICATION

(11) **EP 4 700 304 A1**
(43) Date of publication of application: **25.02.2026**
(21) Application number: 25197523.1
(22) Date of filing: 22.08.2025
(51) Int. Cl.: F24S 25/61, F24S 25/00, E04D 13/00, E04G 21/32, H02S 20/24

(54) **A FIXING DEVICE FOR FIXING ROOFTOP DEVICES AND A FIXING ARRANGEMENT FOR FIXING ROOFTOP DEVICES AND A METHOD FOR FIXING ROOFTOP DEVICES**

(30) Priority: 22.08.2024 FI 20246050
(71) Applicant: Peltitarvike Oy, 00940 Helsinki (FI)
(72) Inventor: Bärlund, Kristian, 00940 Helsinki (FI); Mäenpää, Lasse, 00940 Helsinki (FI); Lepola, Henna, 00940 Helsinki (FI)
(74) Representative: LEITZINGER OY

(57) **Abstract**

The invention relates to a fixing device (7) for fixing devices (1,2), in particular solar panels (1) and a lifeline (2), on top of an insulated roof (3) of a building (4) wherein the fixing device (7) comprises a fixing base (13) for fixing the fixing device (7) to a bearing structure (31) of the roof (3), and an elongated fixing pole (8), wherein the fixing device (7) comprises a first mounting means (9) for a lifeline (2) and a second mounting means (10) for a support structure (11) of solar panels (1). The invention also relates to a fixing arrangement (A) and a method implementing the fixing device (7).

## Description

### Field of the invention

The invention relates to fixing of solar panels and a lifeline on top of a heat insulated roof of a building. The building is particularly one with a heat insulated roof.

### Background of the invention

In solar panel systems, it is common to install solar panels on top of a roof of a building. Thus, rooftop area can be utilized and the solar panel system does not consume space for instance from beside the building. Moreover, rooftop usually offers a spacious, open and effectively sunlit/unshaded place for the panel system due to its high position.

The roof of large buildings, such as for example office buildings, apartment buildings or industrial buildings, are often horizontal or slightly inclined. The roof of such a building is often constructed such that they comprise a bearing structure, such as a concrete slab for instance, and a heat insulation on top of the bearing structure of the roof, as well as a waterproof cover extending on top of the insulation. Accordingly, in this kind of solution, the heat insulation is between the bearing structure of the roof and the waterproof cover. The roof may comprise additional layers such as a vapor barrier. The heat insulation may comprise heat insulation layers the uppermost of which can be made harder than the layer(s) below it so that the uppermost layer does not deform easily for example when a person walks on the waterproof cover. The thickness of the heat insulation typically ranges from 20 cm to 40 cm. The waterproof cover [also hereinafter referred to as water isolation] may be made of rollable sheets such as a bituminous felt sheets for example. The waterproof cover may then comprise two bituminous felt sheets layered on top of each other, for instance. The waterproof cover may alternatively be made of PVC sheets or roof plate (tin roof; "kattopelti").

One phenomenon, as noticed by the applicant, with roof structures having thick amount of heat insulation between the bearing structures of the roof and the waterproof cover is that the roof structure deforms slightly during its lifetime. More specifically, the heat insulation oftentimes slightly gets thinner. Such dimensional changes allow the waterproof cover to sink [painua] slightly downwards closer to the bearing structure.

The solar panel systems are commonly built such that several solar panels thereof are mounted on a support structure such as a rail for instance, which is mounted directly on the surface structure of the roof structure e.g. by screws or bolts screwed into the waterproof cover and the material below it such as to the aforementioned relatively hard heat insulation layer. There may be also wood structures right below the waterproof cover to which screws can be fixed. The solar panel systems have been mounted to multiple positions at the roof top to facilitate its firmness so that blasts of wind would not detach it.

It may be a requirement that a rooftop is provided with safety devices facilitating safe working on the rooftop. This kind of structures are advantageous when servicing the solar panel systems. This kind of safety device is in particular a lifeline to which the worker can connect a rope, a cable or a strap of a safety harness. The rope, a cable or a strap can thus prevent the worker wearing the harness from falling from the rooftop. The lifeline can be in the form of an elongated cable tensioned between two poles fixed to the roof structures. A runner such as a loop or ring or an sort of guide device can be mounted on the lifeline such that it can run along it. Thus, the worker can move on the rooftop relatively freely. The poles should be sturdy and fixed firmly to the roof structure so that they are able to endure the forces in the event that the worker falls. It has been contemplated by the applicant that the poles could be mounted on the bearing structures of the building.

One drawback of previous solutions has been that they have required finding multiple fixing points to the objects to be installed on the rooftop, which inter alia consumes time and makes the overall system complex. One drawback of previous solutions has been that they have required using different fixing devices, which inter alia consumes time and makes the overall system complex. One drawback of previous solutions has been that the waterproof cover has been pierced at great number of locations by fixing means of the objects to be installed on the rooftop. One drawback of previous solutions has been that the mounting solution of the solar system has not been very sturdy so it has required to be fixed to high number of positions.

### Brief description of the invention

The object of the invention is to introduce an improved fixing arrangement as well as an improved fixing device as well as an improved method for fixing.

An object is to introduce a new solution by which one or more of the above-mentioned problems of prior art and/or drawbacks discussed or implied elsewhere in the description can be alleviated.

Thus, a solution is achieved by which plurality of objects can be installed firmly on the rooftop with a single fixing device and with a single connection to the roof. A small amount of piercings or openings are required in the waterproof cover of the roof.

It is brought forward a new fixing device for fixing devices, in particular solar panels and a lifeline, on top of an insulated roof of a building wherein the fixing device comprises a fixing base (13) for fixing the fixing device to a bearing structure of the roof, and an elongated fixing pole, wherein the fixing device comprises a first mounting means for a lifeline and a second mounting means for a support structure of solar panels.

With this kind of solution one or more of the above-mentioned objects can be facilitated.

Preferable further details of the fixing device are introduced in the following, which further details can be combined with the fixing device individually or in any combination.

In a preferred embodiment, a first end of the fixing pole is connected to the fixing base; and the fixing device comprises said first mounting means at the second end of the fixing pole.

It is also brought forward a new fixing arrangement for fixing solar panels and a lifeline on top of a heat insulated roof of a building, which building comprises
a heat insulation on top of the bearing structure of the roof; and
a waterproof cover extending on top of the heat insulation;
wherein the fixing arrangement comprises a fixing device fixed to the bearing structure of the roof, the fixing device comprising an elongated fixing pole, the fixing pole extending through the insulation and the waterproof cover in longitudinal direction (L) of the pole and protruding in longitudinal direction (L) of the pole above the plane (p) of the waterproof cover, wherein the fixing device comprises a first mounting means for a lifeline and a second mounting means for a support structure of solar panels.

With this kind of solution one or more of the above-mentioned objects can be facilitated.

Preferable further details of the fixing arrangement are introduced in the following, which further details can be combined with the fixing arrangement and/or with the fixing device individually or in any combination.

In a preferred embodiment, the heat insulated roof is particularly such that the heat insulation is carried by the bearing structure and the waterproof cover is carried by the heat insulation.

In a preferred embodiment, a lifeline is mounted on said first mounting means, and a support structure of solar panels is mounted on said second mounting means.

In a preferred embodiment, the fixing device comprises the first mounting means at the upper end of the fixing pole, and in particular above the plane (p) of the waterproof cover.

In a preferred embodiment, the second mounting means are in a position which is lower than the position of the first mounting means and/or the second mounting means are in a position which is in the longitudinal direction of the pole closer to the fixing base than the position of the first mounting means.

In a preferred embodiment, the second mounting means are mounted on the fixing pole.

In a preferred embodiment, the first mounting means are at a distance at least 10 cm from the second mounting means in longitudinal direction (L) of the pole.

In a preferred embodiment, the first mounting means for a lifeline comprise a connector member to which the lifeline can be connected. The connector member may be mounted on the elongated fixing pole or mountable on the elongated fixing pole e.g. by attaching it to the end [upper/second end] thereof for instance. The mounting can be implemented by a bolt joint for example. The connector member preferably comprises a hole to which a fastener or a clip of the lifeline can be connected, or through which the lifeline can be arranged to pass.

In a preferred embodiment, the fixing device comprises a fixing base (13) for fixing the fixing device to the bearing structure, the pole being fixedly connected to the fixing base (13). Preferably, the fixing device is fixed via the fixing base (13) to the bearing structure with one or more fixing members (13a) such as preferably screws, bolts or rivets. The fixing base (13) is preferably a flange and/or or a plate member, and one or more holes for receiving a fixing member 13a extend in direction L through the fixing base (13).

In a preferred embodiment, the fixing base (13) rests on top of the bearing structure carried by it.

In a preferred embodiment, the fixing base is at the lower end of the fixing pole.

In a preferred embodiment, the second mounting means comprise a fixing base (10) to which the support structure can be fixed. The fixing base (10) is preferably a flange and/or or a plate.

In a preferred embodiment, the support structure is fixed to the fixing base (10) preferably in particular with one or more fixing members, such as preferably with one or more screws, bolts or rivets for example.

In a preferred embodiment, the waterproof cover is made of rollable sheets such as a bitumen felt sheets, PVC sheets or roof plates for example.

In a preferred embodiment, the fixing base (10) is between two layers of the waterproof cover, preferably more specifically between a first layer formed by a first sheet and a second layer formed by a second sheet, each sheet preferably being a bituminous felt sheet or other rollable felt sheet such as PVC sheet. Preferably, the fixing base (10) comprises holes extending through it in direction L for receiving bitumen by which the fixing base (10) is attached or attachable to the waterproof cover.

In a preferred embodiment, the fixing base (10) is preferably a flange and/or or a plate.

In a preferred embodiment, the fixing base (10) is attached to the waterproof cover and/or rests at least partially carried by the waterproof cover.

In a preferred embodiment, the second mounting means are movable at least in in a first direction (d1), which is the longitudinal direction (L) of the pole towards the bearing structure and/or the fixing base (13) of the fixing device.

In a preferred embodiment, the fixing base is between two layers of the waterproof cover, preferably more specifically between a first layer formed by a first sheet and a second layer formed by a second sheet, each sheet preferably being a bituminous felt sheet or other rollable felt sheet such as PVC sheet; and/or the fixing base is attached to the waterproof cover; and/or the fixing base rests at least partially carried by the waterproof cover; and the second mounting means are movable at least in in a first direction, which is the longitudinal direction (L) of the pole, towards the bearing structure and/or towards the fixing base of the fixing device. Thus, the second mounting means, in particular the fixing base thereoof, is movable together with the waterproof cover if/when it descents in direction L. This is advantageous, because the fixing base can thus adapt in direction L its position according to the position of the waterproof cover.

In a preferred embodiment, the fixing pole comprises a first elongated rod and a second part, preferably a second elongated rod, which first elongated rod and second part are connected to each other such that they are movable relative to each other in longitudinal direction (L) of the fixing pole. They are preferably connected to each other telescopically.

In a preferred embodiment, the first elongated rod, and the second part, which is preferably a second elongated rod, are connected to each other telescopically, in particular such that they are movable by sliding relative to each other in the longitudinal direction (L) of the fixing pole.

In a preferred embodiment, the second mounting means are mounted on the first elongated rod immovably in longitudinal direction (L) of the pole relative to the first elongated rod.

In a preferred embodiment, the first elongated rod to which the second mounting means are mounted is movable at least in said first direction

In a preferred embodiment, the fixing device comprises a spring means, such as a compression spring, arranged to elastically resist movement of the second mounting means (10) and/or a first elongated rod on which the second mounting means are mounted, in a first direction (d1), which is the longitudinal direction (L) of the pole towards the bearing structure [downwards] and/or the fixing base (13) of the fixing device.

In a preferred embodiment, movement the first elongated rod on which the second mounting means are mounted is blocked over a limit towards in a second direction, which is the longitudinal direction (L) of the pole outwards from the bearing structure and/or the fixing base (13) of the fixing device.

In a preferred embodiment, one or more solar panels are mounted on the support structure of solar panels.

In a preferred embodiment, the support structure of solar panels is an elongated mounting rail.

In a preferred embodiment, the bearing structure is or at least comprises a concrete structure such as a concrete slab or concrete slabs side by side such as a hollow core slab(s). The concrete structure may be reinforced by rebars possibly.

In a preferred embodiment, the lifeline is or at least comprises a cable or a rail.

In a preferred embodiment, flexible elongated connection member such as a rope, a cable or a strap is connectable to the lifeline, which flexible elongated connection member is further connected or connectable to a safety harness.

In a preferred embodiment, the insulation comprises mineral wool. In this context, the fixing device is advantageous since a firm support can be found for devices despite relatively soft layers of the roof. Preferably, the thickness of the insulation is 10-70 cm, most preferably 15-50 cm.

In a preferred embodiment, the heat insulation comprises one or more plates of heat insulation material on top of each other. Said plates preferably include a heat insulation material plate of first hardness on top of a heat insulation material plate of second hardness, the first hardness being greater than the second hardness. The heat insulation material plate of first hardness is preferably in particular the topmost of the one or more plates of heat insulation material.

In a preferred embodiment, the arrangement comprises at least two of the fixing devices fixed to a bearing structure of the roof, i.e. satisfying what is defined above for the fixing device, the same lifeline being mounted on the first mounting means of the two fixing devices and tensioned to extend between them and/or the same support structure of solar panels is mounted on the second mounting means of the two fixing devices.

In a preferred embodiment, the arrangement comprises the roof and/or the building.

In a preferred embodiment, the support structure is positioned beside the fixing pole a horizontal distance apart from the fixing pole.

In a preferred embodiment, the support structure is fixed or can be fixed to the fixing base at a fixing point, which is beside the fixing pole a horizontal distance apart from the fixing pole.

It is also brought forward a new method for fixing devices, such as solar panels, and a lifeline on top of a roof of a building, the method comprising
fabricating an arrangement as described or defined anywhere above or in the claims of the application; and/or
using a fixing device as defined anywhere above or in the claims of the application fixing solar panels and a lifeline on top of a heat insulated roof of a building which building comprises a heat insulation on top of the bearing structure of the roof; and a waterproof cover extending on top of the insulation.

With this kind of solution one or more of the above-mentioned objects can be facilitated.

Preferable further details of the method have been introduced above, which further details can be combined with the method individually or in any combination.

Generally, the longitudinal direction of the pole is preferably orthogonal to the plane of the waterproof cover of the roof. The building is preferably a building the roof of which is horizontal or inclined. In the first case, the plane of the waterproof cover of the roof is horizontal whereby the longitudinal direction of the pole is vertical, and in the latter case the plane of the waterproof cover of the roof is inclined whereby the longitudinal direction of the pole is inclined at the same angle from vertical as the plane of the waterproof cover is from horizontal.

### Brief description of the drawings

In the following, the present invention will be described in more detail by way of example and with reference to the attached drawings, in which
Figure 1 illustrates schematically a fixing arrangement according to an embodiment.
Figure 2 illustrates partially sectional view A-A of Figure 1.
Figure 3 illustrates an enlarged detailed view of the fixing device of Figure 1 as well as the detail B of Figure 2 the heat insulation and waterproof cover of the roof not being shown.
Figure 4 illustrates the view of Figure 3 showing also the heat insulation and waterproof cover of the rood.
Figure 5 illustrates a perspective partial view of the arrangement (parts of the roof not shown).
Figure 6 illustrates an enlarged perspective partial view of the detail B of Figure 2.
Figure 7 illustrates preferred further details of the fixing device of Figure 1.
Figures 8-10 illustrate preferred details of the first mounting means and their connection with a lifeline.

### Detailed description

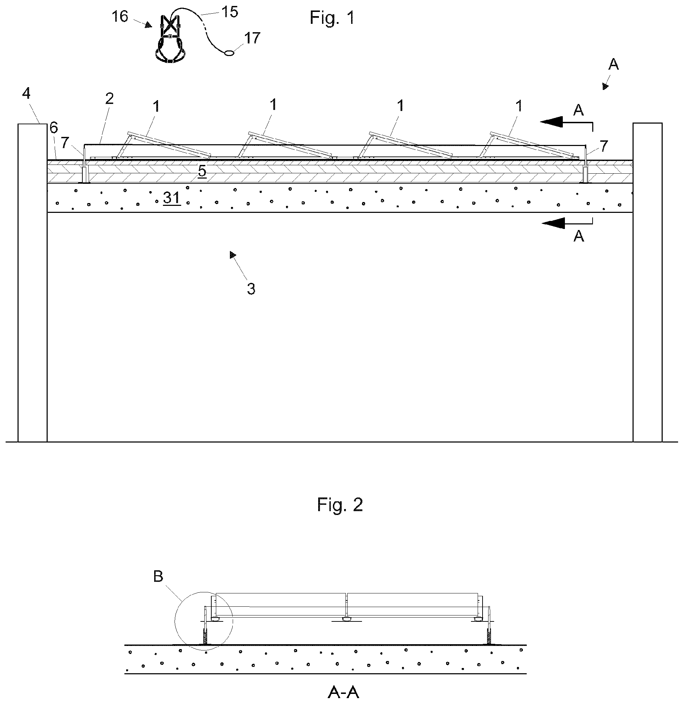

Figure 1 illustrates a fixing arrangement A according to an embodiment, for fixing solar panels 1 and a lifeline 2 on top of a heat insulated roof 3 of a building 4, which building 4 comprises a heat insulation 5 on top of the bearing structure 31 of the roof 3; and a waterproof cover 6 extending on top of the insulation 5.

The heat insulated roof 3 is particularly such that the heat insulation 5 is carried by the bearing structure 31 and the waterproof cover 6 is carried by the heat insulation 5.

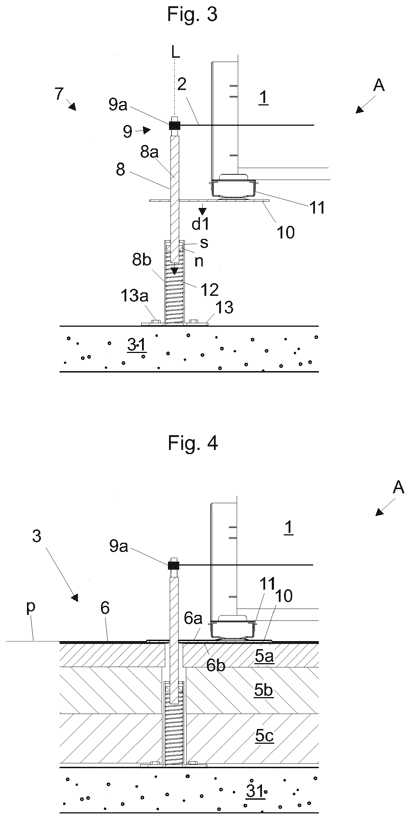

The fixing arrangement A comprises a fixing device 7 according to an embodiment, more particularly plurality of them. The structure of the fixing device 7 is visible in Figures 3-4 showing particularly area B of Figure 2. The fixing device 7 is fixed to the bearing structure 31 of the roof 3, the fixing device 7 comprising an elongated fixing pole 8, the fixing pole 8 extending through the insulation 5 and the waterproof cover 6 in longitudinal direction L of the pole 8 and protruding in longitudinal direction L of the pole 8 above the plane p of the waterproof cover 6, wherein the fixing device 7 comprises a first mounting means 9 for a lifeline 2 and a second mounting means 10 for a support structure 11 of solar panels 1. Thus, a solution is achieved whereby which with a single fixing device 7 and with a single connection to the roof 3 plurality of objects 1,2, namely the solar panels 1 and a lifeline 2, can be installed firmly on the rooftop. Hereby, small amount of piercings or openings are required in the waterproof cover 6 of the roof 3, whereby watertightness of the roof 3 can be facilitated.

A lifeline 2 is mounted on said the mounting means 9, and a support structure 11 of solar panels 1 is mounted on the second mounting means 10. Solar panels 1 are mounted on the support structure 11 of solar panels 1. The support structure 11 of solar panels 1 is an elongated mounting rail.

A first end [also referred to as the lower end] of the fixing pole 8 is connected to the fixing base 13; and the fixing device 7 comprises said first mounting means 9 at the second end [also referred to as the upper end] of the fixing pole 8. Said first mounting means 9 are at the upper end of the fixing pole 8, and above, [preferably 5-30 cm, however more preferably 10-30 cm as measured in direction L] the plane p of the waterproof cover 6. Thus, the support point of the lifeline 2 is positioned a distance above the waterproof cover 6 and/or the lifeline 2 can extend a distance above the waterproof cover 6. Thus, the lifeline 2 can have a clearance below it where parts connected to a safety harness 16 can run unobstructed. Also, thus the worker can quickly notice and find the lifeline 2, and connect his harness to it with a rope, cable or strap. Also, low structures can extend below the lifeline 2 across its path if this happens to be needed. For instance, it may occur that some parts of support structure 11 of solar panels 1 extend partially below the lifeline 2.

The second mounting means 10 are mounted on the fixing pole 8, in particular at a position which is lower, in particular as measured in longitudinal direction L of the pole 8, than the position of the first mounting means 9. This is established by such structure that the second mounting means 10 are mounted on the fixing pole 8 in a position which is in the longitudinal direction L closer to the fixing base 13 than the position of the first mounting means 9. Thus, the support structure 11 of solar panels 1 can be mounted at a low position, and more specifically at the level of the waterproof cover 6 as will be described even though the lifeline is mounted at a high position. Close proximity to the roof 4 is an advantageus position for the support structure 11 since hereby a stability of the structure is facilitated and the solar panels need not be unnecessarily high, which might cause issues e.g. with regard to wind. The second mounting means 10 are more specifically mounted on a [first] elongated rod 8a of the fixing pole 8.

In the preferred embodiment, the fixing base 10 is attached to the waterproof cover 6 and/or rests at least partially carried by the waterproof cover 6. Thus, forces can be transmitted between these structures in direction L. It may be that when time passes, the waterproof cover 6 slightly descends, e.g. due to sinking thereof, which may result from dimension changes of the heat insulation 5, in particular slight shrinkage thereof in thickness direction. For facilitating that these structures 6 and 10 can maintain their relative position unchanged despite said descent, it would be advantageous if the fixing base 10 can adapt in direction L its position according to the position of the waterproof cover 6. A floating structure is thus advantageous. In the preferred embodiment, this adaptation is achieved, because the second mounting means 10 are movable in a first direction d1 [illustrated in Figure 3 by arrow], which is the longitudinal direction L of the pole 8 towards the bearing structure 31 and/or the fixing base 13 of the fixing device 7. Thus, the second mounting means 10 are movable together with the waterproof cover 6 if/when it descents in direction L.

In the preferred embodiment, the fixing pole 8 comprises a first elongated rod 8a and a second elongated rod 8b, which are connected to each other such that they are movable relative to each other in direction L. They are connected to each other in particular telescopically. The second mounting means 10 are mounted on the first elongated rod 8a, which is movable in the first direction d1.

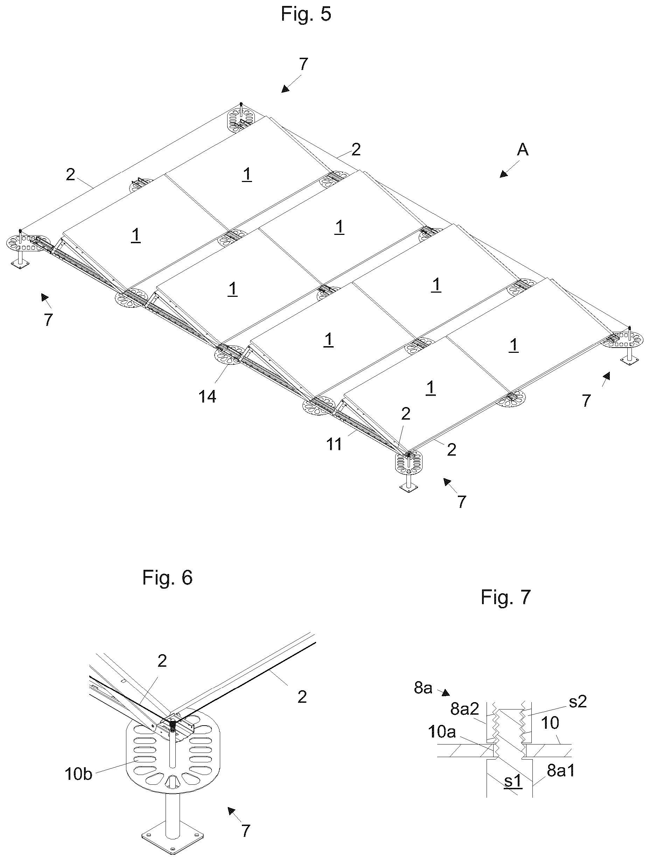

Preferably, the second mounting means 10 are mounted on the first elongated rod 8a immovably in direction L relative to the first elongated rod 8a. Figure 7 illustrates a preferred way to implement this, although this could be also implemented with some other structure. In the illustrated solution, the first elongated rod 8a consists of plurality of parts 8a1,8a2, including part 8a1 and part 8a2 screwable towards each other. A portion of the mounting means 10 is between said parts 8a1,8a2, the portion of the second mounting means 10 being tightened or at least tightenable immovably in direction L between parts 8a1,8a2 by screwing. One 8a2 of the parts is provided with a threaded male screw end s1 insertable through a hole 10a of the mounting means 10 and into a threaded female screw end s2 provided in the other part, the screw ends s1,s2 being screwable together.

For controlling movement of the second mounting means 10 mounted on it in said first direction, the fixing device 7 comprises a spring means 12, preferably more specifically a compression spring 12 as illustrated, arranged to elastically resist movement of the second elongated rod 8b and thereby also movement of the second mounting means 10 in the first direction d1.

Movement of the second elongated rod 8b on which the second mounting means 10 are mounted is blocked over a limit in a second direction [upwards in Figure 3; not illustrated by arrows], which is the longitudinal direction L of the pole 8 outwards from the bearing structure 31 and/or the fixing base 13 of the fixing device 7. Generally, the first and second direction are opposite pointing directions. In the preferred embodiment, the blocking is achieved by a member n of the second elongated rod 8b, which is in the presented case a nut member or sleeve member fixed to an end of the second elongated rod 8b and movable in direction L within a space s such as preferably a cylinder space comprised in the second elongated rod 8b. An end [upper end in Figures] of the space s is arranged to block movement of the member n in said second direction over a limit. The member n is also be arranged to rest against the spring means 12, whereby it can transmit forces between the spring means 12 and the first elongated rod 8a.

In the preferred embodiment, the lifeline 2 is or at least comprises a cable, such as a metal cable. Such a lifeline is simple to manufacture as well as easy and safe in use. The cable 2 is tensioned between two of the fixing devices 7 as described referring to Figures 1-4.

A flexible elongated connection member 15 such as a rope, a cable or a strap is connectable to the lifeline 2, which flexible elongated connection member 15 is further connected or connectable to a safety harness 16. The lifeline 2 can be provided with a runner, which is able to run along the lifeline and is connectable to the flexible elongated connection member. Such a runner 17 can alternatively be provided on the flexible elongated connection member 15. The person coming to work on the rooftop can then connect the runner 17 to the lifeline 2. The runner 17 is in this case preferably an openable clip. As illustrated in Figure 1, the arrangement further comprises a harness means 15,16,17, comprising said member 15 and a safety harness 16 and preferably also the runner 17.

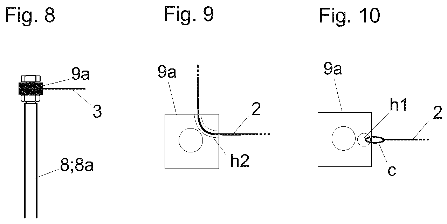

Generally, the first mounting means 9 of the lifeline 2 could have various alternative structures, for which reason they are shown schematically. In the preferred embodiment, the first mounting means 9 for a lifeline 3 comprise a connector member 9a to which a lifeline 2 can be connected. In Figures, the connector member 9a has been illustrated schematically. The connector member 9a may be mounted or mountable on the elongated fixing pole 8, e.g. by attaching it to the upper/second end [in the Figures the upper end of the fixing pole] thereof for instance. Figure 8 illustrates one way to implement said attaching, which is in this case by a bolt joint. However, the connector member 9a could alternatively be an integral part of the elongated pole 8, such as a part thereof comprising the hole h1,h2 to which to a lifeline 2 can be connected. The connector member 9a could be made in various alternative ways. Generally preferably, the connector member 9a preferably comprises a hole h1 to which a fastener or a clip c of the lifeline 2 can be connected [an example illustrated in Figure 10], or an opening h2 through which hole h2 the lifeline 2 can be arranged to pass [an example illustrated in Figure 9]. Figures 9 and 10 illustrate alternative structures for the connector member 9a of Figure 8 as seen from above as well as for the connection of the lifeline 2.

The second mounting means 10 comprise a fixing base 10 to which the support structure 11 can be fixed. In the arrangement A, the support structure 11 is fixed to the fixing base 10 in particular with one or more fixing members 13a such as preferably screws, bolts or rivets. The fixing base 10 is preferably a flange and/or or a plate. Thus, it is in direction L relatively flat and can be attached to the waterproof cover 6 with large contact area and/or between two layers 6a,6b.

The waterproof cover 6 is preferably made of rollable sheets such as a bituminous felt sheets for example. The waterproof cover may then comprise two bituminous felt sheets layered on top of each other, for instance. The waterproof cover may alternatively be made of rollable PVC sheets or roof plate ["kattopelti"] if the roof is a tin roof ["peltikatto"].

In the preferred embodiment illustrated, the fixing base 10 is between two layers of the waterproof cover 6, more specifically between a first layer 6a formed by a first sheet and second layer 6b formed by a second sheet. In the preferred example, each sheet is preferably a bituminous felt [also known as "bitumikermi" or its synonym "kattohuopa"]. The position of the fixing base 10 being between the layers, facilititest waterproofness of the cover 6. The fixing base 10 preferably comprises holes 10b extending through it in direction L for receiving bitumen by which the fixing base 10 is attached or attachable to the waterproof cover 6. Thus, the fixing base 10 can be simply attached to the waterproof cover 6 by bitumen welding.

The fixing device 7 comprises a fixing base 13 for fixing the fixing device 7 to the bearing structure 31, the pole 8 being fixedly connected to the fixing base 13. In the arrangemenet A, the fixing device 7 is fixed via the fixing base 13 to the bearing structure 31 with one or more fixing members 13a such as preferably screws, bolts or rivets. One or more holes for receiving a fixing member 13a extend in direction L through the fixing base 13. The fixing base 13 is preferably a flange and/or or a plate member as illustrated. The fixing base 13 rests on top of the bearing structure 31 carried by it.

In the preferred embodiment of Figure 1, the insulation 5 comprises mineral wool. Preferably, the thickness of the insulation 5 is 10-70 cm, most preferably 15-50 cm. These ranges are advantageous for achieving good heat insulation throughout the year also in cold environments such as in regions where freezing temperatures are common. When the thickness is this considerable, the aforementioned adaptation is advantageous to eliminate effect of dimensional changes of the insulation without risk of structures being damages.

Preferably, the heat insulation 5 comprises one or more plates of insulation material 5a,5b,5c on top of each other. Said plates 5a,5b,5c preferably include an insulation material plate of first hardness 5a on top of an insulation material plate 5b of second hardness, the first hardness being greater than the second hardness. The insulation material plate of first hardness 5a is in particular the topmost of the one or more plates of insulation material 5a,5b,5c. Thus, the harder material plate can carry better the loads of the waterproof cover 6, without excessively deforming e.g. under a person walking on the roof. The softer plates being below said hard material plate facilitates maximizing heat insulation in this area.

The fixing device 7 according to an embodiment has been described in context of the arrangement A above. The fixing device 7 comprises a fixing base 13 for fixing the fixing device 7 to a bearing structure 31 of the roof 3, and an elongated fixing pole 8, wherein the fixing device 7 comprises a first mounting means 9 for a lifeline 2 and a second mounting means 10 for a support structure 11 of solar panels 1.

In the preferred embodiment of the method for fixing devices, such as solar panels 1 and a lifeline 2 on top of a roof of a building, the method comprises
fabricating an arrangement A as described or defined anywhere above or in the claims of the application; and/or
using a fixing device 7 as defined anywhere above or in the claims of the application fixing solar panels 1 and a lifeline 2 on top of a heat insulated roof 3 of a building 4 which building 4 comprises a heat insulation 5 on top of the bearing structure 31 of the roof 3; and a waterproof cover 6 extending on top of the insulation 5.

In the preferred embodiment, the building 4 and/or the roof 3 comprises the bearing structure 31 of the roof 3.

In the preferred embodiment, the bearing structure 31 is or at least comprises a concrete structure. The bearing structure 31 is or at least comprises a concrete slab or concrete slabs placed side by side. Each said concrete slab may be a hollow core concrete slab. The concrete structure may be reinforced by rebars. The bearing structure could alternatively have some other material and/or shape. As it is well known in the field of building technology, the bearing structure can be constructed from wood structures and/or metal structures. Accordingly, the bearing structure 31 may alternatively be a wood structure or metal structure, or a combination of two or three of said concrete structure, wood structure and metal structure.

Generally preferably, the solar panels are panels comprising photovoltaic cells, but they could alternatively be some other kind of solar panels.

Generally, the part of the pole 8 on which second mounting means 10 are mounted could alternatively have some other shape than the shape of an elongated rod.

Generally, the solar panels 1 are arranged to form an array of solar panels.

Generally, in addition to the fixing devices 7, the arrangement A may have also different kinds of fixing devices, such as the intermediate fixing devices 14 illustrated in Figure 5 utilized for fixing the intermediate parts of the support structure 11 to the roof 3. The intermediate fixing devices 14 can be support legs fixed to the roof 3, such as to the surface layers thereof, but need not necessarily be fixed to the bearing structure 31. The additional fixing devices 14 are not necessary and if they are to be utilized for example due to the support structure 11 being very long, they can have various alternative structures. The structure of these intermediate fixing devices 14 is thus not more specifically disclosed.

Generally, for achieving a telescopic structure, the second elongated rod 8b can comprise a space s such as preferably, but no necessarily, a cylinder space, in which space s an end of the second elongated rod 8b can move in direction L, preferably, but no necessarily such that they form a cylinder-piston -pair. For achieving telescopic movability there are available many structural options. Thus, the telescopic movability of parts 8a,8b could also be provided with some alternative structure than what is shown and described, such as by a sideways open structure where parts 8a,8b would be telescopically connected rails, one having a guide member slidable in direction L in a channel of the other.

Generally preferably, the fixing pole 8 is made of metal.

Generally preferably, the lifeline 2 is or at least comprises a cable, such as a metal cable, but alternatively it could be a rail.

Generally preferably, the fixing base 10 comprises either a fixing hole extending through it in direction L for receiving a fixing member such as a bolt or screw or rivet via which the support structure 11 can be fixed to the a fixing base 10 or a screw member, e.g. welded on it, protruding in direction L upwards to be inserted in a hole of the support structure 11 and to be tightened together with the support structure with a nut member. In the aforementioned alternatives, the fixing member or the screw member, respectively, preferably extends parallel to the longitudinal direction L of the pole 8 beside the pole 8 a horizontal distance apart from the pole 8. A fixing point is preferably in particular formed at the point of the fixing member or at the point of the screw member, respectively. The fixing point is then preferably in particular beside the pole 8 a horizontal distance apart from the pole 8.

Generally, in the application many structures have been described as preferred. This means that they are only preferably, but not necessarily, as defined. Accordingly, said structures could be of some other kind or possibly not present at all.

Generally preferably, as illustrated in Figure 1, the arrangement A comprises at least two of the fixing devices 7 fixed to a bearing structure 31 of the roof 3, i.e. satisfying what is defined above for the fixing device 7, the same lifeline 2 being mounted on the first mounting means 9 of the two fixing devices 7 and tensioned to extend between them and/or the same support structure 11 of solar panels 1 is mounted on the second mounting means 10 of the two fixing devices 7.

Generally, the second part 8b of the pole is preferably an elongated rod, but this is not necessary, because it could have alternatively some other shape.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A fixing device (7) for fixing devices (1,2), in particular solar panels (1) and a lifeline (2) on top of an insulated roof (3) of a building (4), wherein the fixing device (7) comprises a fixing base (13) for fixing the fixing device (7) to a bearing structure (31) of the roof (3), and an elongated fixing pole (8), wherein the fixing device (7) comprises a first mounting means (9) for a lifeline (2) and a second mounting means (10) for a support structure (11) of solar panels (1).

2. A fixing arrangement (A) for fixing solar panels (1) and a lifeline (2) on top of a heat insulated roof (3) of a building (4), which building (4) comprises
a heat insulation (5) on top of the bearing structure (31) of the roof (3); and
a waterproof cover (6) extending on top of the insulation (5);
wherein the fixing arrangement (A) comprises a fixing device (7) fixed to the bearing structure (31) of the roof (3), the fixing device (7) comprising an elongated fixing pole (8), the fixing pole (8) extending through the insulation (5) and the waterproof cover (6) in longitudinal direction (L) of the pole (8) and protruding above the plane (p) of the waterproof cover (6), wherein the fixing device (7) comprises a first mounting means (9) for a lifeline (2) and a second mounting means (10) for a support structure (11) of solar panels (1).

3. A fixing arrangement (A) according to any of the preceding claims, wherein a lifeline (2) is mounted on said first mounting means (9), and a support structure (11) of solar panels (1) is mounted on said second mounting means (10).

4. A fixing arrangement (A) or a fixing device (7) according to any of the preceding claims, wherein the fixing device (7) comprises the first mounting means (9) at the upper end of the fixing pole (8).

5. A fixing arrangement (A) or a fixing device (7) according to any of the preceding claims, wherein the second mounting means (10) are in a position which is lower than the position of the first mounting means (9) and/or the second mounting means (10) are in a position which is closer to the fixing base (13) than the position of the first mounting means (9).

6. A fixing arrangement (A) or a fixing device (7) according to any of the preceding claims, wherein the second mounting means (10) are mounted on the fixing pole (8).

7. A fixing arrangement (A) or a fixing device (7) according to any of the preceding claims, wherein the fixing device (7) comprises a fixing base (13) for fixing the fixing device (7) to the bearing structure (31), the pole (8) being fixedly connected to the fixing base (13).

8. A fixing arrangement (A) or a fixing device (7) according to any of the preceding claims, wherein the second mounting means (10) comprise a fixing base (10) to which the support structure (11) is or can be fixed.

9. A fixing arrangement (A) according to any of the preceding claims, wherein the waterproof cover (6) is made of rollable sheets such as a bitumen felt sheets or PVC sheets for example, or roof plates.

10. A fixing arrangement (A) according to any of the preceding claims, wherein
the fixing base (10) is between two layers (6a,6b) of the waterproof cover (6), more specifically between a first layer (6a) formed by a first sheet and a second layer (6b) formed by a second sheet, each sheet (6a,6b) preferably being a bituminous felt sheet or other rollable felt sheet such as PVC sheet; and/or
the fixing base (10) is attached to the waterproof cover (6); and/or
the fixing base (10) rests at least partially carried by the waterproof cover (6).

11. A fixing arrangement (A) or a fixing device (7) according to any of the preceding claims, wherein the second mounting means (10) are movable at least in in a first direction (d1), which is the longitudinal direction (L) of the pole (8) towards the bearing structure (31) and/or the fixing base (13) of the fixing device (7).

12. A fixing arrangement (A) or a fixing device (7) according to any of the preceding claims, wherein the fixing pole (8) comprises a first elongated rod (8a) and a second part (8b), preferably a second elongated rod (8b), which are connected to each other such that they are movable relative to each other in the longitudinal direction (L) of the pole (8).

13. A fixing arrangement (A) or a fixing device (7) according to any of the preceding claims, wherein the second mounting means (10) are mounted on the first elongated rod (8a) immovably in longitudinal direction (L) of the pole (8) relative to the first elongated rod (8a)

14. A fixing arrangement (A) or a fixing device (7) according to any of the preceding claims, wherein the fixing device (7) comprises a spring means (12), such as a compression spring (12), arranged to elastically resist movement of the second mounting means (10) and/or a first elongated rod (8a) on which the second mounting means (10) are mounted, in a first direction (d1), which is the longitudinal direction (L) of the pole (8) towards the bearing structure (31) and/or the fixing base (13) of the fixing device (7).

15. A method for fixing devices (1,2), such as solar panels (1), and a lifeline (2) on top of a roof (3) of a building (4), the method comprising
fabricating an arrangement (A) as defined in any of the preceding claims; and/or
using a fixing device (7) as defined in any of the preceding claims for fixing solar panels (1) and a lifeline (2) on top of a heat insulated roof (3) of a building (4) which building (4) comprises a heat insulation (5) on top of the bearing structure (31) of the roof (3); and a waterproof cover (6) extending on top of the insulation (5).
